# DEMANDE DE BREVET EUROPEEN

(11) **EP 1 172 238 A1**
(43) Date de publication de la demande: **16.01.2002**
(21) Numéro de dépôt: 00402007.9
(22) Date de dépôt: 12.07.2000
(51) Int. Cl.: B60G 15/06, F16F 1/12

(54) **Dispositif pour le positionnement de l'extrémité d'un ressort hélicoidal de suspension**

(71) Demandeur: Allevard Rejna Autosuspensions, 92213 Saint-Cloud Cedex (FR)
(72) Inventeur: Morgan, Paul, Mid Glamorgan, Wales CF40 2HE (GB)
(74) Mandataire: Busnel, Jean-Benoît

(57) **Abrégé**

Dispositif pour le positionnement de l'extrémité d'un ressort hélicoïdal (T) de suspension de véhicule automobile comprenant une coupelle (C) destinée, d'une part, à recevoir la spire d'extrémité (S) dudit ressort en appui et à coopérer, d'autre part, avec un roulement à bille (B) relié à une embase supérieure (E) pour la fixation au châssis du véhicule, caractérisé en ce que ladite coupelle (C) comporte :
- une douille inférieure (1) pourvue d'une cale transversale inclinée (11) contre laquelle la spire (S) d'extrémité supérieure du ressort (T) vient en contact d'appui, d'une jupe latérale (12) logée à l'intérieur dudit ressort (T) et d'une piste de support (13) dudit roulement (B), et
- une couronne supérieure (2) coiffant ledit roulement (B) sans contact avec ladite douille (1) et se raccordant à l'embase supérieure (E) de fixation.

## Description

La présente invention concerne un dispositif pour le positionnement de l'extrémité d'un ressort hélicoïdal de suspension de véhicule automobile.

Les dispositifs connus comprennent généralement une coupelle destinée, d'une part, à recevoir la spire d'extrémité du ressort en appui et à coopérer, d'autre part, avec un roulement à billes relié à une embase pour la fixation au châssis du véhicule.

Cependant, dans ces dispositifs les coupelles ont des dimensions importantes qui les rendent encombrantes et onéreuses.

En outre, pour les coupelles supérieures, la face destinée à l'appui du ressort s'étend perpendiculairement à son axe, ce qui impose l'utilisation de ressorts hélicoïdaux d'enveloppe cylindrique et de rayon uniforme c'est-à-dire sans spire de dimensions réduites.

Dans ces conditions, la ligne d'action du ressort ne peut être optimisée et il n'est donc pas possible de réduire les frottements dans l'amortisseur à un niveau acceptable.

La présente invention a pour but de résoudre ces problèmes techniques de manière satisfaisante.

Ce but est atteint selon l'invention au moyen d'un dispositif du type précédent dans lequel ladite coupelle comporte :
- une douille inférieure pourvue d'une cale transversale inclinée contre laquelle la spire d'extrémité supérieure du ressort vient en contact d'appui, d'une jupe latérale logée à l'intérieur dudit ressort et d'une piste de support dudit roulement, et
- une couronne supérieure coiffant ledit roulement sans contact avec ladite douille et se raccordant à l'embase supérieure de fixation.

Selon un mode de réalisation spécifique, ladite cale comporte une face inférieure hélicoïdale avec une pente radiale et possède ainsi une double inclinaison.

De préférence, ladite pente radiale est comprise entre 1° et 15°.

Selon une variante, la piste de support du roulement est formée d'une gorge périphérique dans laquelle les billes sont logées avec une liberté de rotation.

Selon une variante particulière, ladite couronne possède un bord intérieur en saillie assurant le raccordement à l'embase supérieure par engagement avec un léger jeu dans une cavité latérale ménagée sur ladite embase.

De préférence, la face supérieure de ladite couronne vient en appui contre ladite embase supérieure.

Selon une autre variante, la liaison entre la cale et la jupe est formée d'une zone de courbure dont le rayon est supérieur au rayon du fil du ressort.

Au surplus, pour utiliser un ressort dont la spire d'extrémité est de diamètre réduit, il est prévu que le rayon de la cale soit inférieur au rayon moyen du ressort.

Le dispositif de l'invention permet ainsi d'optimiser le couple frottement/tirage de l'amortisseur tout en utilisant un ressort plus léger.

En outre, le montage du dispositif sur le véhicule est simplifié du fait que la coupelle et le roulement ne forment qu'une seule pièce.

La présente invention sera mieux comprise à la lecture de la description qui va suivre en référence aux dessins sur lesquels :
- la figure 1 représente une vue en élévation d'un mode de réalisation du dispositif de l'invention ;
- la figure 2 représente une vue en coupe du dispositif de la figure 2 intégrée dans un amortisseur de véhicule.

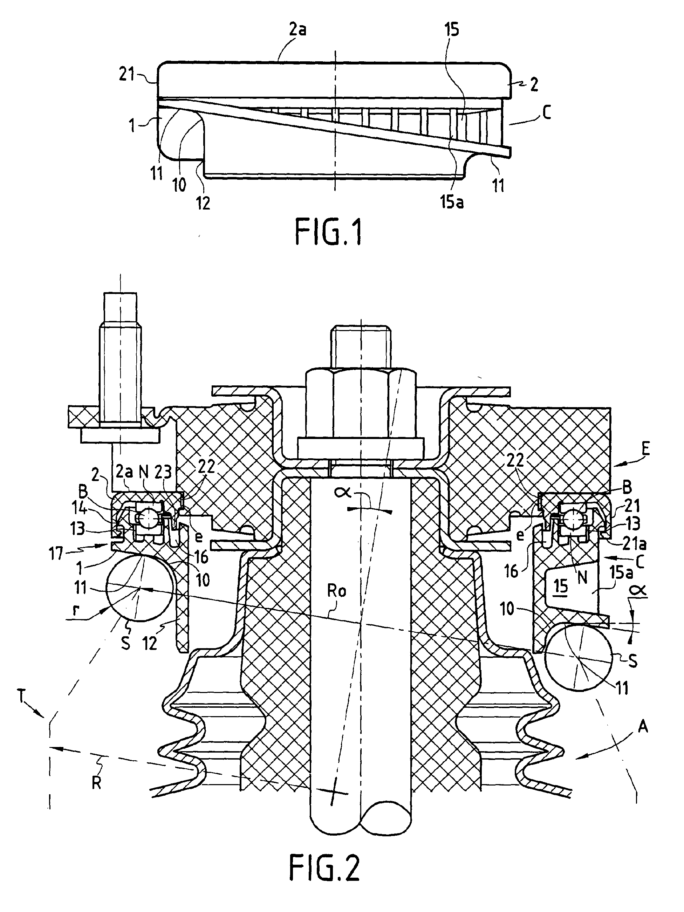

Le dispositif représenté sur les figures 1 et 2 est destiné au positionnement d'un ressort hélicoïdal T de suspension (voir figure 2) et plus particulièrement de son extrémité supérieure matérialisée par la spire S.

Le ressort T est monté de manière traditionnelle autour d'un cylindre amortisseur A.

La spire d'extrémité S est en appui vers le haut, par compression du ressort T contre une coupelle supérieure C qui coopère avec un roulement à billes B, relié à une embase E assurant la fixation de l'ensemble au châssis du véhicule (non représenté).

Selon l'invention, la coupelle C intègre le roulement B. Cette coupelle représentée isolément et en vue extérieure sur la figure 1, et en coupe, dans sa position d'utilisation sur la figure 2, comporte une douille inférieure 1 et une couronne supérieure 2 qui sont assemblées l'une sur l'autre via le roulement B, soit en usine avant le montage sur le véhicule soit lors de l'opération de montage.

La douille 1 est pourvue d'une cale transversale inclinée 11 contre laquelle la spire d'extrémité S du ressort T vient en contact d'appui vers le haut. La cale 11 comporte une face inférieure hélicoïdale présentant aussi une pente radiale α comprise entre 1° et 15° par rapport au plan horizontal.

Cette double inclinaison permet d'obtenir un décalage angulaire α de même valeur de l'axe du ressort T et donc de sa ligne d'action. Le rayon de la face hélicoïdale de la cale 11 est inférieur au rayon moyen R du ressort T et est égal ou légèrement supérieur au rayon Ro de la spire d'extrémité S augmenté du rayon r du fil de cette spire.

La douille 1 comporte également une jupe latérale 12 qui fait saillie vers le bas et qui est logée à l'intérieur du ressort T pour assurer son centrage.

La liaison entre la cale 11 et la jupe 12 est formée d'une zone de courbure 10 dont le rayon est supérieur au rayon r du fil du ressort T pour définir une zone d'appui précise et éviter un positionnement incertain de la spire S.

Dans sa partie supérieure, la douille 1 est pourvue d'une piste 13 de support du roulement B. La piste 13 est supportée par la face supérieure de la cale 11.

La piste 13 est formée d'une gorge périphérique dans laquelle les billes B sont logées avec une liberté de rotation.

Les billes B sont disposées entre deux coussinets N formant entretoises. La cale 11 délimite avec la piste 13 de support du roulement B, des alvéoles latérales 15 séparées par des cloisons verticales 15a assurant la rigidification de la douille 1. Les alvéoles 15 sont en retrait par rapport au bord périphérique 17 de la cale 11.

La couronne 2 vient coiffer le roulement B sans contact avec la douille inférieure 1 et se raccorde à l'embase supérieure E de fixation.

La face supérieure 2a de la couronne vient en appui contre et sous l'embase supérieure E sous l'action du ressort T. Toutefois, un bandeau latéral 21 pourvu d'un jonc périphérique 21a est susceptible de coopérer avec un organe complémentaire tel qu'un crochet 14 porté par la douille 1 pour assurer sa retenue en l'absence du ressort T ou en cas d'affaiblissement de l'appui.

Le bord intérieur 22 de la couronne 2 est en saillie radialement vers l'axe, en vue d'assurer le raccordement à l'embase supérieure E par engagement avec un léger jeu dans une cavité latérale e ménagée sur ladite embase.

La jupe latérale 12 de la douille 1 se prolonge au-delà de la liaison avec la cale 11 pour délimiter avec la piste 13 de support du roulement B, une rainure de guidage et d'étanchéité 16 pour une nervure 23 portée par la face inférieure de la couronne 2.

## Revendications

1. Dispositif pour le positionnement de l'extrémité d'un ressort hélicoïdal (T) de suspension de véhicule automobile comprenant une coupelle (C) destinée, d'une part, à recevoir la spire d'extrémité (S) dudit ressort en appui et à coopérer, d'autre part, avec un roulement à bille (B) relié à une embase supérieure (E) pour la fixation au châssis du véhicule, **caractérisé en ce que** ladite coupelle (C) comporte :
- une douille inférieure (1) pourvue d'une cale transversale inclinée (11) contre laquelle la spire (S) d'extrémité supérieure du ressort (T) vient en contact d'appui, d'une jupe latérale (12) logée à l'intérieur dudit ressort (T) et d'une piste de support (13) dudit roulement (B), et
- une couronne supérieure (2) coiffant ledit roulement (B) sans contact avec ladite douille (1) et se raccordant à l'embase supérieure (E) de fixation.

2. Dispositif selon la revendication 1, **caractérisé en ce que** ladite cale (11) comporte une face inférieure hélicoïdale avec une pente radiale (α) et possède ainsi une double inclinaison.

3. Dispositif selon la revendications 2, **caractérisé en ce que** ladite pente radiale (α) est comprise entre 1° et 15°.

4. Dispositif selon l'une des revendications précédentes, **caractérisé en ce que** la piste (13) de support du roulement (B) est formée d'une gorge périphérique dans laquelle les billes sont logées avec une liberté de rotation.

5. Dispositif selon l'une des revendications précédentes, **caractérisé en ce que** ladite couronne (2) possède un bord intérieur (22) en saillie assurant le raccordement à l'embase (E) par engagement avec un léger jeu dans une cavité latérale (e) ménagée sur ladite embase.

6. Dispositif selon l'une des revendications précédentes, **caractérisé en ce que** la face supérieure (2a) de ladite couronne (2) vient en appui contre ladite embase supérieure.

7. Dispositif selon l'une des revendications précédentes, **caractérisé en ce que** la liaison entre la cale (11) et la jupe (12) est formée d'une zone de courbure (10) dont le rayon est supérieur au rayon (r) du fil du ressort (T).

8. Dispositif selon l'une des revendications précédentes, **caractérisé en ce que** le rayon de la cale (11) est inférieur au rayon moyen (R) du ressort (T).
